# EUROPÄISCHE PATENTSCHRIFT

(11) **EP 4 104 266 B1**
(45) Veröffentlichungstag und Bekanntmachung des Hinweises auf die Patenterteilung: **24.07.2024**
(21) Anmeldenummer: 21710188.0
(22) Anmeldetag: 15.02.2021
(51) Int. Cl.: H02G 11/00, B60R 16/02, B60R 16/027

(54) **KABELFÜHRUNG UND KRAFTFAHRZEUG**
CABLE GUIDE AND MOTOR VEHICLE
GUIDE-CÂBLE ET VÉHICULE À MOTEUR

(30) Priorität: 16.02.2020 DE 102020104018
(43) Veröffentlichungstag der Anmeldung: 21.12.2022
(73) Patentinhaber: Newfrey LLC, New Britain, CT 06053 (US); Volkswagen AG, 38440 Wolfsburg (DE)
(72) Erfinder: STAU, Bastian, 35394 Gießen (DE); WILL, Peter, 35394 Gießen (DE); BURGSMÜLLER, Henrik, 35394 Gießen (DE)
(74) Vertreter: Haarpatent Patentanwälte Krämer Meyer
(86) Internationale Anmeldenummer: PCT/EP2021/053653
(87) Internationale Veröffentlichungsnummer: WO 2021/160884

(56) Entgegenhaltungen:
- EP-A1- 1 936 767
- EP-A1- 1 944 198
- EP-B1- 1 936 767
- DE-A1- 102006 045 647
- DE-A1- 102017 206 410
- DE-B4- 102006 045 647
- DE-T5- 112017 002 492
- FR-A1- 2 893 457

## Beschreibung

Die Erfindung betrifft eine Kabelführung für eine Kabelverbindung zwischen einer Fahrzeugkarosserie und einer Schiebetür umfassend eine erste Anschlussvorrichtung, eine zweite Anschlussvorrichtung sowie eine zwischen der ersten Anschlussvorrichtung und der zweiten Anschlussvorrichtung verlaufende Energiekette, die bei geschlossener Schiebetür eine gestreckte Konfiguration und bei geöffneter Schiebetür eine umgelenkte Konfiguration aufweist, wobei die Energiekette an einem Ende ein erstes Endglied und am entgegengesetzten Ende ein zweites Endglied aufweist, wobei das erste Endglied schwenkbar an der ersten Anschlussvorrichtung gelagert ist und wobei die zweite Anschlussvorrichtung eine Spannvorrichtung für die Energiekette umfasst.

Die Erfindung betrifft des Weiteren ein Kraftfahrzeug mit einer Fahrzeugkarosserie und mindestens einer Schiebetür.

Übliche Schiebetüren von Fahrzeugen werden ausgehend vom geschlossenen Zustand entriegelt und anschließend beim Öffnen derart zwangsgeführt, dass die Schiebetür zunächst quer zur Fahrzeugkarosserie versetzt wird und anschließend entlang der Fahrzeugkarosserie verschoben.

Eine gattungsgemäße Kabelführung für eine dauerhafte Kabelverbindung zwischen einer Fahrzeugkarosserie und einer Schiebetür ist beispielsweise aus dem Dokument DE 10 2005 055 848 A1 bekannt. Dabei ist vorgesehen, dass eine Gliederkette bei geschlossenem Zustand der Schiebtür durch eine Spannkraft F1 gestreckt gehalten wird, um eine definierte Ausgangssituation sicher zu stellen. Beim Aufschieben der Schiebetür wird das türseitig schwenkbeweglich angeschlagene End-Kettenglied zum Umlenken der Gliederkette mittels einer Federkraft F2 aktiv verschwenkt. Es hat sich gezeigt, dass die gegeneinander wirkenden Kräfte F1 und F2 aufwendig aufeinander abgestimmt und regelmäßig nachjustiert werden müssen, andernfalls neigt die Gliederkette gerade zu Beginn des Öffnungsvorgangs, wo die Schiebetür und die Fahrzeugkarosserie noch sehr nahe beieinander sind, zum Klappern, weil sie entweder nicht ausreichend gespannt ist oder am türseitigen Ende zu nahe an die Fahrzeugkarosserie gedrückt wird.

Das Dokument DE 11 2017 002492 offenbart eine Kabelführung für eine Kabelverbindung zwischen einer Fahrzeugkarosserie und einer Schiebetür umfassend eine erste Anschlussvorrichtung, eine zweite Anschlussvorrichtung sowie eine zwischen der ersten Anschlussvorrichtung und der zweiten Anschlussvorrichtung verlaufende Energiekette, die bei geschlossener Schiebetür eine gestreckte Konfiguration und bei geöffneter Schiebetür eine umgelenkte Konfiguration aufweist, wobei die Energiekette an einem Ende ein erstes Endglied und am entgegengesetzten Ende ein zweites Endglied aufweist, wobei das erste Endglied schwenkbar an der ersten Anschlussvorrichtung gelagert ist und wobei die zweite Anschlussvorrichtung eine Spannvorrichtung für die Energiekette umfasst.

Der Erfindung liegt die Aufgabe zugrunde, eine Alternative zu bekannten Kabelführungen für eine Kabelverbindung zwischen einer Fahrzeugkarosserie und einer Schiebetür bereitzustellen, bei der insbesondere Berührungen mit der Fahrzeugkarosserie und/oder der Schiebetür wirksam verhindert werden und die dabei günstig herzustellen sowie einfach zu montieren ist.

Die Aufgabe wird erfindungsgemäß gelöst durch eine Kabelführung für eine Kabelverbindung zwischen einer Fahrzeugkarosserie und einer Schiebetür umfassend eine erste Anschlussvorrichtung, eine zweite Anschlussvorrichtung sowie eine zwischen der ersten Anschlussvorrichtung und der zweiten Anschlussvorrichtung verlaufende Energiekette, die bei geschlossener Schiebetür eine gestreckte Konfiguration und bei geöffneter Schiebetür eine umgelenkte Konfiguration aufweist, wobei die Energiekette an einem Ende ein erstes Endglied und am entgegengesetzten Ende ein zweites Endglied aufweist, wobei das erste Endglied schwenkbar an der ersten Anschlussvorrichtung gelagert ist und wobei die zweite Anschlussvorrichtung eine Spannvorrichtung für die Energiekette umfasst, wobei die erfindungsgemäße Kabelführung dadurch weitergebildet ist, dass das zweite Endglied der Energiekette längsbeweglich an der zweiten Anschlussvorrichtung gelagert ist und derart von der Spannvorrichtung beaufschlagt wird, dass das zweite Endglied bei gestreckter Konfiguration der Energiekette beidseitig beweglich in einer schwimmenden Gleichgewichtslage gehalten wird.

Erfindungsgemäß ist insbesondere vorgesehen, dass das zweite Endglied der Energiekette relativ zu der zweiten Anschlussvorrichtung entlang einer Bewegungsachse in beide Richtungen beweglich gelagert ist. Bei gestreckter Konfiguration der Energiekette ist ferner erfindungsgemäß vorgesehen, dass das zweite Endglied mittels der Spannvorrichtung in einer schwimmenden Gleichgewichtslage gehalten wird, wobei insbesondere eine Beweglichkeit des Kettengliedes aus der Gleichgewichtslage heraus in beide Richtungen entlang der Bewegungsachse ermöglicht bleibt.

Die Beweglichkeit des zweiten Endgliedes relativ zur zweiten Anschlussvorrichtung kann dabei durch geeignete Maßnahmen, beispielsweise Anschläge, begrenzt sein, um ein Lösen des zweiten Endgliedes von der zweiten Anschlussvorrichtung zu verhindern. Bei der Auslegung der Komponenten einer erfindungsgemäßen Kabelführung ist jedoch insbesondere darauf zu achten, dass die Gleichgewichtslage ausreichend entfernt von vorgegebenen Endpunkten der Beweglichkeit des zweiten Endgliedes der Energiekette liegt.

Während des Entriegelns verringert sich der Abstand zwischen den beiden Anschlussvorrichtungen einer zwischen Fahrzeugkarosserie und Schiebetür vorhandenen gattungsgemäßen Kabelführung. Die erfindungsgemäß vorgesehene schwimmende Gleichgewichtslage erlaubt es dabei, die Energiekette sowohl bei geschlossener Schiebetür als auch beim Entriegeln der Schiebetür unter Spannung zu halten, bis sich die öffnende Schiebetür seitlich von der Karosserie weg bewegt hat. Gleichzeitig wird dank der schwimmenden Gleichgewichtslage stets ein etwaig notwendiger Toleranzausgleich gewährleistet. Die Energiekette wird somit dank der Erfindung erst dann entspannt, wenn ausreichend Platz zum Umlenken der Energiekette beim Aufschieben der Schiebetür zwischen Fahrzeugkarosserie und Schiebetür vorhanden ist. Durch die erfindungsgemäß längsbewegliche Lagerung des zweiten Endgliedes der Energiekette an der zweiten Anschlussvorrichtung wird außerdem vorteilhafterweise erreicht, dass sich die Energiekette bei Toleranzausgleich und/oder Spannen weder in Richtung Fahrzeugkarosserie noch in Richtung Schiebetür bewegt. Ein Anschlagen der Energiekette an der Fahrzeugkarosserie oder der Schiebetür mit begleitendem Klappern wird dadurch wirksam verhindert.

Mit der erfindungsgemäß vorgesehenen einen Spannvorrichtung an der zweiten Anschlussvorrichtung wird dabei eine einfache und kostengünstige Konstruktion mit eindeutiger Richtung und Stärke der Spannkraft und entsprechend zuverlässiger Funktion der Spannvorrichtung ermöglicht.

Die schwimmende Gleichgewichtslage der gestreckten Energiekette bietet darüber hinaus einen einfachen und wirksamen Toleranzausgleich für die Länge der Energiekette bzw. den Abstand zwischen den beiden Anschlussvorrichtungen.

Die zweite Anschlussvorrichtung umfasst vorzugsweise wenigstens einen Anschlag zur Begrenzung eines Bewegungsbereichs des zweiten Endgliedes bei umgelenkter Konfiguration der Energiekette. Das bedeutet insbesondere, dass ungeachtet der schwimmenden Gleichgewichtslage bei geschlossener Schiebetür das zweite Endglied der Energiekette unter Einfluss der Spannvorrichtung am Anschlag anliegt, wenn die Schiebetür geöffnet ist.

Beispielsweise sind die erste Anschlussvorrichtung zur karosserieseitigen Befestigung und die zweite Anschlussvorrichtung zur türseitigen Befestigung ausgebildet. Dies bedeutet insbesondere, dass die Energiekette karosserieseitig schwenkbar angeschlagen ist, während die Energiekette in gestreckter Konfiguration im Wesentlichen längs zur Schiebetür ausgerichtet ist.

Dadurch wird ermöglicht, dass alle umgelenkten Bereiche der Energiekette sich stets zwischen der geöffneten Schiebetür und der Fahrzeugkarosserie befinden, auch wenn die Schiebetür nur teilweise aufgeschoben ist. Die Energiekette wird so wirksam vor unbeabsichtigter Beschädigung beim Ein- und Aussteigen geschützt.

Vorzugsweise ist das erste Endglied der Energiekette an der ersten Anschlussvorrichtung vorspannungsfrei schwenkbar gelagert. Die Vorspannung der Energiekette in gestreckter Konfiguration ist dadurch im Wesentlichen durch die Spannvorrichtung bestimmt und kann so gezielt vorgegeben werden. Die auf die Energiekette wirkenden Kräfte können auf ein Minimum reduziert werden, wodurch Belastung und Verschleiß in den beweglichen Kettengliedern verringert wird. Auch können für die Energiekette leichtere und/oder günstigere Materialien wie Kunststoffe statt Metall zum Einsatz kommen.

Vorteilhafterweise umfasst die erste Anschlussvorrichtung Anschläge zur beidseitigen Begrenzung eines Schwenkbereichs des ersten Endglieds. Durch geeignete Auslegung dieser Anschläge kann sichergestellt werden, dass die umgelenkte und somit nicht vorgespannte Energiekette nicht an die Fahrzeugkarosserie und/oder die Schiebetür anschlägt. Am entgegengesetzten Ende des Schwenkbereichs kann durch geeignete Auslegung des betreffenden Anschlags eine Übertotpunktlage bzw. ein Einschwenken des ersten Endglieds beim Aufschieben der Schiebetür in die falsche Richtung verhindert werden.

Die Kettenglieder einer Energiekette sind in der Regel derart miteinander verbunden, dass die Kettenglieder aus einer gestreckten Konfiguration heraus in lediglich einer ausgezeichneten Umlenkungsrichtung gegeneinander schwenkbar sind und dabei derart im Schwenkbereich begrenzt sind, dass sich ein Mindestkrümmungsradius ergibt. Entgegen der Umlenkungsrichtung sind die Kettenglieder hingegen in der Regel derart gegeneinander abgestützt, dass ein Verschwenken über die gestreckte Konfiguration der Energiekette hinaus gesperrt ist.

Es hat sich als besonders vorteilhaft erwiesen, wenn die Energiekette einer erfindungsgemäßen Kabelführung einen ersten Abschnitt bei der ersten Anschlussvorrichtung und einen zweiten Abschnitt bei der zweiten Anschlussvorrichtung aufweist, wobei die beiden Abschnitte ausgehend von der gestreckten Konfiguration in jeweils entgegengesetzte Richtungen umlenkbar sind.

Bei bestimmungsgemäßem Einbau zwischen Fahrzeugkarosserie und Schiebetür ist dabei vorzugsweise vorgesehen, dass die Umlenkungsrichtung des ersten Abschnitts weg von der Fahrzeugkarosserie ist und die Umlenkungsrichtung des zweiten Abschnitts weg von der Schiebetür ist.

Im Bereich der Anschlussvorrichtungen, wo die Energiekette der Fahrzeugkarosserie bzw. der Schiebetür am nächsten kommt, wird so verhindert, dass sich die Energiekette zur Fahrzeugkarosserie bzw. der Schiebetür hin umlenken kann. Auch bei kleinen Bewegungen der Energiekette, beispielsweise durch Vibrationen oder Stöße, wird Anschlagen und Klappern so wirksam verhindert.

Zudem wird es ermöglicht, im Übergang zwischen den beiden Abschnitten auch unter Vorspannung der Energiekette in gestreckter Konfiguration einen von 180° abweichenden Winkel vorzusehen, der beim Aufschieben der Schiebetür und Aufheben der Spannkraft ein korrektes Umlenken der Energiekette erzwingt.

Ein ausreichender Abstand der umgelenkten Energiekette zur Fahrzeugkarosserie lässt sich beispielsweise sicherstellen, wenn der erste Abschnitt der Energiekette einen größeren Mindestkrümmungsradius aufweist als der zweite Abschnitt. Alternativ oder zusätzlich kann hierfür vorgesehen sein, dass der erste Abschnitt der Energiekette kürzer ist als der zweite Abschnitt.

Vorzugsweise umfasst die Spannvorrichtung eine druckbelastete Feder. Die druckbelastete Feder ist dabei vorzugsweise geeignet an der zweiten Anschlussvorrichtung abgestützt, um so eine Spannkraft zum Vorspannen der Energiekette auf das zweite Endglied auszuüben. Hierdurch ist eine im Vergleich zur Verwendung von einer zugbelasteten Feder wesentlich einfachere Konstruktion und Montage der Spannvorrichtung und/oder der zweiten Anschlussvorrichtung und/oder des zweiten Endgliedes der Energiekette ermöglicht.

Unbeabsichtigte Torsion der Energiekette wird wirksam verhindert, wenn das zweite Endglied der Energiekette verdrehgesichert an der zweiten Anschlussvorrichtung gelagert ist.

Die der Erfindung zugrundeliegende Aufgabe wird auch gelöst durch ein Kraftfahrzeug mit einer Fahrzeugkarosserie und mindestens einer Schiebetür, das dadurch weitergebildet ist, dass das Kraftfahrzeug eine erfindungsgemäße Kabelführung umfasst.

Wenn das erfindungsgemäße Kraftfahrzeug mehrere Schiebetüren umfasst, so ist erfindungsgemäß für wenigstens eine der mehreren Schiebetüren eine erfindungsgemäße Kabelführung vorgesehen.

Dabei ist die erste Anschlussvorrichtung der Kabelführung vorzugsweise an der Fahrzeugkarosserie befestigt, während die zweite Anschlussvorrichtung der Kabelführung an der Schiebetür befestigt ist.

Die Erfindung wird nachfolgend anhand eines Ausführungsbeispiels der Erfindung näher erläutert, das in den Zeichnungen dargestellt ist. Es zeigen
- Figur 1: schematisch eine exemplarische Kabelführung gemäß der Erfindung bei geschlossener Schiebetür;
- Figur 2: schematisch die erfindungsgemäßen Kabelführung aus Fig. 1 bei geöffneter Schiebetür;
- Figur 3a: schematisch eine Detaildarstellung zur türseitigen Anschlussvorrichtung der erfindungsgemäßen Kabelführung aus Fig. 1 und 2;
- Figur 3b: schematisch eine Schnittdarstellung der türseitigen Anschlussvorrichtung aus Fig. 3a; und
- Figur 4: schematisch ein beispielhaftes Kraftfahrzeug gemäß der Erfindung mit einer erfindungsgemäßen Kabelführung.

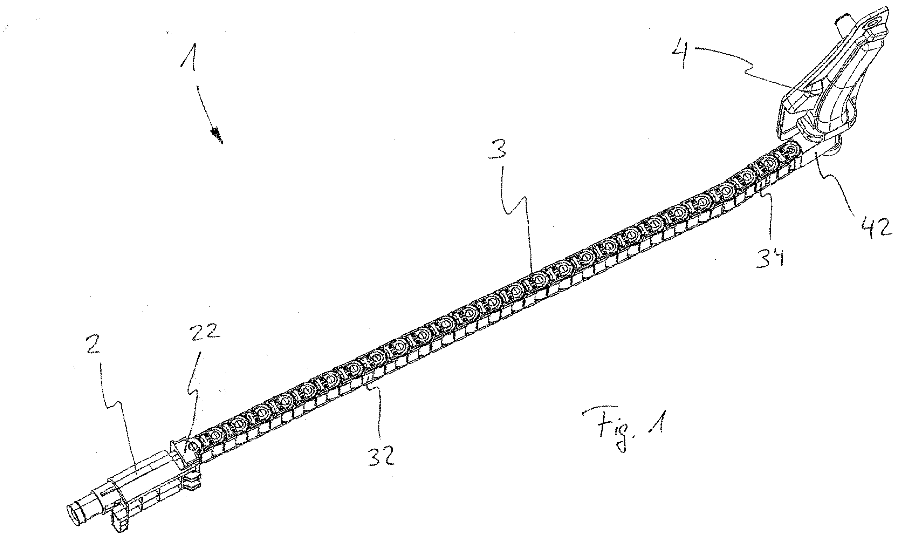

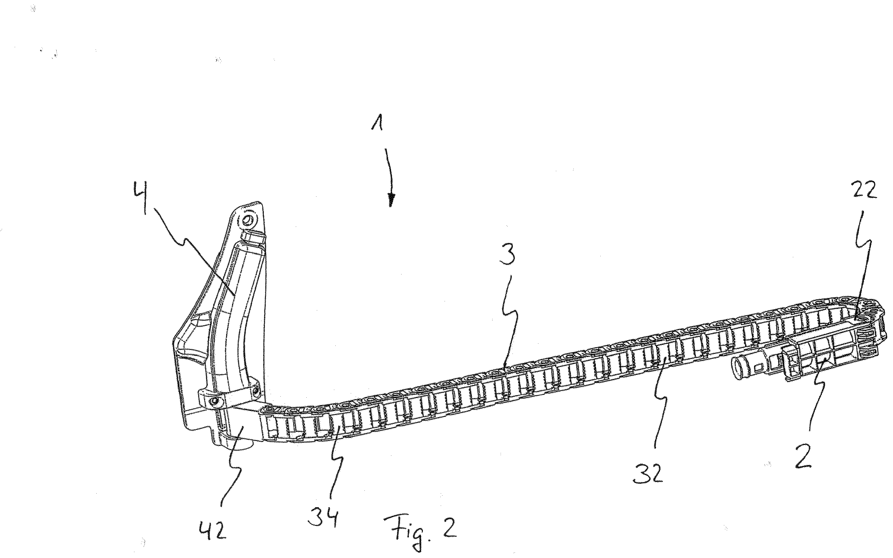

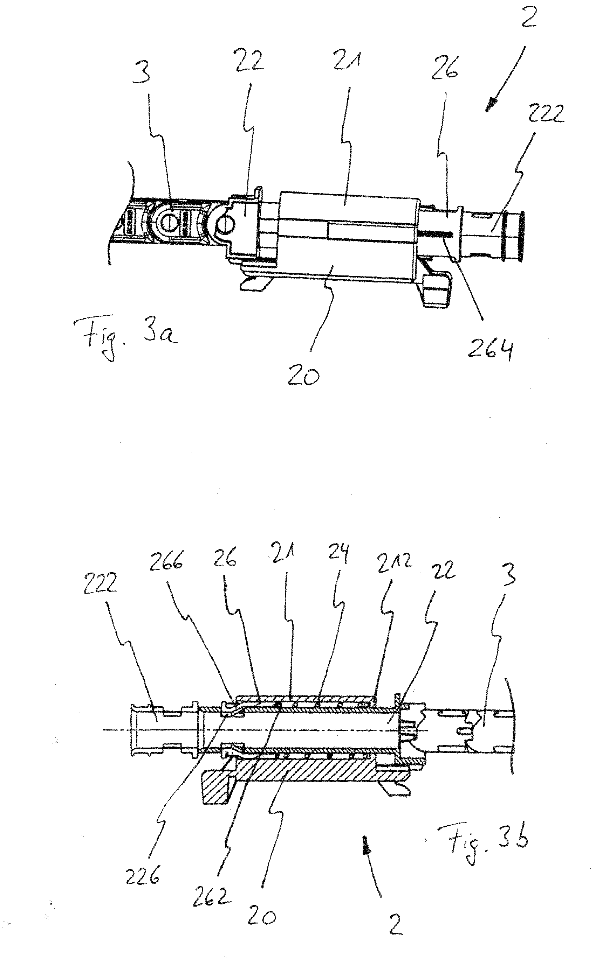

Die Zeichnungen zeigen in Fig. 1 und 2 schematisch eine beispielhafte Kabelführung 1 gemäß der Erfindung. Details der beispielhaften Kabelführung gemäß der Erfindung sind in Fig. 3a und 3b dargestellt. Die Kabelführung 1 ist insbesondere eingerichtet und ausgebildet zur sicheren Führung eines Kabels oder Kabelstranges zwischen einer Fahrzeugkarosserie 52 mit einer Türöffnung einerseits und einer Schiebetür 54 zum Verschließen der Türöffnung andererseits. Die geführten Kabel sind nicht Bestandteil der Erfindung und daher in den Zeichnungen nicht dargestellt.

Die erfindungsgemäße Kabelführung 1 umfasst eine türseitige Anschlussvorrichtung 2, die fest mit der Schiebetür 54 verbindbar ist. Des Weiteren umfasst die Kabelführung 1 eine karosserieseitige Anschlussvorrichtung 4, die fest mit der Fahrzeugkarosserie 52 verbindbar ist. Schließlich umfasst die Kabelführung 1 eine Energiekette 3, die an ihrem einen Ende ein erstes Endglied 42, das schwenkbar an der karosserieseitigen Anschlussvorrichtung 4 gelagert ist, und an ihrem entgegengesetzten Ende ein zweites Endglied 22, das längsbeweglich an der türseitigen Anschlussvorrichtung 2 gelagert ist, aufweist.

Des Weiteren umfasst die Energiekette 3 zwei Abschnitte 32, 34 mit unterschiedlicher, insbesondere entgegengesetzter, Umlenkungsrichtung und unterschiedlichem Mindestkrümmungsradius. Der türseitige Abschnitt 32 erlaubt dabei eine Umlenkung hin zur Fahrzeugkarosserie 52 mit einem im Vergleich kleineren Mindestkrümmungsradius, aber nicht hin zur Schiebetür 54, während der karosserieseitige Abschnitt 34 eine Umlenkung hin zu Schiebetür 54 mit einem im Vergleich größeren Mindestkrümmungsradius, aber nicht hin zur Fahrzeugkarosserie 52 erlaubt. Zudem ist der karosserieseitige Abschnitt 34 wesentlich kürzer als der türseitige Abschnitt 32.

Details zur türseitigen Anschlussvorrichtung 22 sind aus Fig. 3a und 3b ersichtlich, wobei Fig. 3a eine Seitenansicht und Fig. 3b eine seitliche Schnittdarstellung zeigen.

Die türseitige Anschlussvorrichtung 2 umfasst einen Grundkörper 20, der fest mit einer Schiebetür 54 verbindbar ist. Der Grundkörper 20 weist einen Bügel 21 auf, innerhalb dessen das zweite Endglied 22 der Energiekette 3 angeordnet ist. Das Endglied 22 weist dafür einen im Wesentlichen hohlzylinderförmigen Abschnitt auf, der in den Bügel 21 eingeschoben ist.

Konzentrisch um den hohlzylinderförmigen Abschnitt ist eine Druckfeder 24 angeordnet, die sich an einem Anschlag 212 am Bügel 21 abstützt. An der entgegengesetzten Seite ist die Druckfeder 21 mit einer Hülse 26 gesichert, die wenigstens teilweise konzentrisch zwischen dem hohlzylinderförmigen Abschnitt des Endgliedes 22 und dem Bügel 21 angeordnet ist und mittels Rasthaken 266, die in geeignete Aussparungen 226 am Endglied 22 eingreifen und dadurch verdrehsicher mit dem Endglied 22 verbunden ist. An ihrem äußeren Umfang weist die Hülse 26 einen längsaxial verlaufenden Grat 264 auf, der in einer passenden Nut an der Innenseite des Bügels 21 läuft, so dass die Hülse 26 zusammen mit dem Endglied 22 längsbeweglich, aber verdrehgesichert innerhalb des Bügels 21 bzw. der türseitigen Anschlussvorrichtung 2 gelagert ist.

Die Längsbewegung des Endgliedes 22 innerhalb der Anschlussvorrichtung 2 ist beidseitig durch den Anschlag 212 begrenzt, nämlich bei vollständiger Komprimierung der Feder 24 einerseits und bei Anlage des verdickten, kettenseitig an den hohlzylinderförmigen Abschnitt angrenzenden Abschnitts anderseits.

Zur Anbindung beispielsweise einer Zugentlastung oder weiterer kabelführender Elemente innerhalb der Schiebetür ist ferner ein Endstück 222 an dem kettenabgewandten Ende des Endgliedes 22 vorgesehen, das mit dem hohlzylinderförmigen Abschnitt des Endgliedes 22 dauerhaft oder lösbar verbunden wurde, beispielsweise durch Rasten, eine Schraubverbindung, Kleben oder Reibschweißen.

Figur 1 zeigt die erfindungsgemäße Kabelführung 1 in gestreckter Konfiguration, die bei bestimmungsgemäßem Einsatz der geschlossenen Schiebetür 54 entspricht. Die Abmaße der Kabelführung 1, insbesondere die Länge der Energiekette 3, sind dabei derart gewählt, dass dabei das Endglied 22 vorgespannt durch die Feder 24 innerhalb der türseitigen Anschlussvorrichtung 2 in beide Richtungen längsbeweglich ist. Es ist insbesondere ein Vorteil der Erfindung, dass durch die längsbewegliche Lagerung des zweiten Endglieds 22 zum Spannen der Energiekette 3 keine Querbewegung in Richtung zur Schiebetür 54 oder zur Fahrzeugkarosserie 52 hin erfolgt. Gerade zum Beginn des Öffnens bzw. zum Ende des Schließens der Schiebetür 54, wo der Spalt zwischen Schiebetür 54 und Fahrzeugkarosserie 52 besonders eng ist, wird dadurch ein Anschlagen oder Klappern der gestreckten Energiekette 3 wirksam unterbunden.

Im Gegensatz dazu zeigt Fig. 2 dieselbe erfindungsgemäße Kabelführung 1 in umgelenkter Konfiguration, die bei bestimmungsgemäßer Verwendung der geöffneten Schiebetür 54 entspricht.

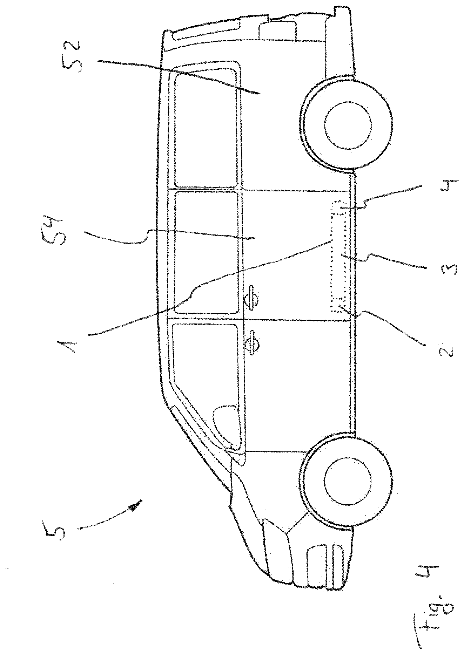

Ein beispielhaftes Kraftfahrzeug 5 gemäß der Erfindung ist in Fig. 4 dargestellt. Das Kraftfahrzeug 5 umfasst eine Fahrzeugkarosserie 52 mit einer Öffnung, die durch eine Schiebetür 54 verschlossen werden kann. Das erfindungsgemäße Kraftfahrzeug 5 ist dadurch ausgezeichnet, dass zwischen der Fahrzeugkarosserie 52 und der Schiebetür 54 eine erfindungsgemäße Kabelführung 1 angeordnet ist. Dabei sind die türseitige Anschlussvorrichtung 2 der Kabelführung 1 mit der Schiebetür 54 und die karosserieseitige Anschlussvorrichtung 4 der Kabelführung 1 mit der Fahrzeugkarosserie 52 verbunden.

Die Darstellung in Fig. 4 zeigt das erfindungsgemäße Kraftfahrzeug 5 mit geschlossener Schiebetür 54. Dabei wird die Öffnung in der Fahrzeugkarosserie 52 mittels der Schiebetür 54 verschlossen und die Kabelführung 1 befindet sich auf der dem Fahrzeuginneren zugewandten Seite der Schiebetüpr54 und wird von dieser verdeckt. Die Energiekette 3 der Kabelführung 1 zwischen der türseitigen Anschlussvorrichtung 2 und der karosserieseitigen Anschlussvorrichtung 4 befindet sich in gestreckter Konfiguration.

### BEZUGSZEICHEN

- 1: Kabelführung
- 2: türseitige Anschlussvorrichtung
- 20: Grundkörper
- 21: Bügel
- 212: Anschlag
- 22: türseitiges Endglied
- 222: Endstück
- 226: Aussparung
- 24: Feder
- 26: Hülse
- 262: Stirnfläche
- 264: Grat
- 266: Rasthaken
- 3: Energiekette
- 32: erster Abschnitt
- 34: zweiter Abschnitt
- 4: karosserieseitige Anschlussvorrichtung
- 40: Grundkörper
- 42: karosserieseitiges Endglied
- 5: Fahrzeug
- 52: Fahrzeugkarosserie
- 54: Schiebetür

## Patentansprüche

1. Kabelführung (1) für eine Kabelverbindung zwischen einer Fahrzeugkarosserie (52) und einer Schiebetür (54) umfassend eine erste Anschlussvorrichtung (4), eine zweite Anschlussvorrichtung (2) sowie eine zwischen der ersten Anschlussvorrichtung (4) und der zweiten Anschlussvorrichtung (2) verlaufende Energiekette (3), die bei geschlossener Schiebetür (54) eine gestreckte Konfiguration und bei geöffneter Schiebetür (54) eine umgelenkte Konfiguration aufweist, wobei die Energiekette (3) an einem Ende ein erstes Endglied (42) und am entgegengesetzten Ende ein zweites Endglied (22) aufweist, wobei das erste Endglied (42) schwenkbar an der ersten Anschlussvorrichtung (4) gelagert ist und wobei die zweite Anschlussvorrichtung (2) eine Spannvorrichtung (24) für die Energiekette (3) umfasst,
**dadurch gekennzeichnet, dass**
das zweite Endglied (22) der Energiekette (3) längsbeweglich an der zweiten Anschlussvorrichtung (2) gelagert ist und derart von der Spannvorrichtung (24) beaufschlagt wird, dass das zweite Endglied (22) bei gestreckter Konfiguration der Energiekette (3) beidseitig beweglich in einer schwimmenden Gleichgewichtslage gehalten wird.

2. Kabelführung (1) nach Anspruch 1,
**dadurch gekennzeichnet, dass**
die erste Anschlussvorrichtung (4) zur karosserieseitigen Befestigung ausgebildet ist und dass die zweite Anschlussvorrichtung (2) zur türseitigen Befestigung ausgebildet ist.

3. Kabelführung (1) nach Anspruch 1 oder 2,
**dadurch gekennzeichnet, dass**
das erste Endglied (42) der Energiekette (3) an der ersten Anschlussvorrichtung (4) vorspannungsfrei schwenkbar gelagert ist.

4. Kabelführung (1) nach einem der Ansprüche 1 bis 3,
**dadurch gekennzeichnet, dass**
die Energiekette (3) einen ersten Abschnitt (34) bei der ersten Anschlussvorrichtung (4) und einen zweiten Abschnitt (32) bei der zweiten Anschlussvorrichtung (2) aufweist, wobei die beiden Abschnitte (34, 32) ausgehend von der gestreckten Konfiguration in jeweils entgegengesetzte Richtungen umlenkbar sind.

5. Kabelführung (1) nach Anspruch 4,
**dadurch gekennzeichnet, dass**
der erste Abschnitt (34) der Energiekette (3) einen größeren Mindestkrümmungsradius aufweist als der zweite Abschnitt (32).

6. Kabelführung (1) nach Anspruch 4 oder 5,
**dadurch gekennzeichnet, dass**
der erste Abschnitt (34) der Energiekette (3) kürzer ist als der zweite Abschnitt (32).

7. Kabelführung (1) nach einem der Ansprüche 1 bis 6,
**dadurch gekennzeichnet, dass**
die Spannvorrichtung (24) eine druckbelastete Feder (24) umfasst.

8. Kabelführung (1) nach einem der Ansprüche 1 bis 7,
**dadurch gekennzeichnet, dass**
das zweite Endglied (22) der Energiekette (3) verdrehgesichert an der zweiten Anschlussvorrichtung (2) gelagert ist.

9. Kraftfahrzeug (5) mit einer Fahrzeugkarosserie (52) und mindestens einer Schiebetür (54),
**dadurch gekennzeichnet, dass**
das Kraftfahrzeug (5) eine Kabelführung (1) gemäß einem der Ansprüche 1 bis 8 umfasst.

10. Kraftfahrzeug (5) nach Anspruch 9,
**dadurch gekennzeichnet, dass**
die erste Anschlussvorrichtung (4) der Kabelführung (1) an der Fahrzeugkarosserie (52) befestigt ist und dass die zweite Anschlussvorrichtung (2) der Kabelführung (1) an der Schiebetür (54) befestigt ist.

## Claims

1. Cable guide (1) for a cable connection between a vehicle body (52) and a sliding door (54) comprising a first connection device (4), a second connection device (2) and an energy chain (3) running between the first connection device (4) and the second connection device (2), which has a stretched configuration when the sliding door (54) is closed and a deflected configuration when the sliding door (54) is open, wherein the energy chain (3) has a first end link (42) at one end and a second end link (42) at the opposite end ( 22), wherein the first end link (42) is pivoted on the first connection device (4) and the second connection device (2) comprises a tensioning device (24) for the energy chain (3),
**characterized in that**
the second end link (22) of the energy chain (3) is mounted longitudinally movable on the second connection device (2) and is acted upon by the tensioning device (24) in such a way that, in stretched configuration of the energy chain (3), the second end link (22) is sustained in a floating equilibrium position movable in both directions.

2. Cable guide (1) according to claim 1,
**characterized in that**
the first connection device (4) is designed for fastening on the body and that the second connection device (2) is designed for fastening on the door.

3. Cable guide (1) according to claim 1 or 2,
**characterized in that**
the first end link (42) of the energy chain (3) is pivoted pre-tensionless on the first connection device (4).

4. Cable guide (1) according to one of claims 1 to 3,
**characterized in that**
the energy chain (3) has a first section (34) at the first connection device (4) and a second section (32) at the second connection device (2), wherein the two sections (34, 32) can be deflected out of the stretched configuration in opposite directions.

5. Cable guide (1) according to claim 4,
**characterized in that**
the first section (34) of the energy chain (3) has a larger minimum bending radius than the second section (32).

6. Cable guide (1) according to claim 4 or 5,
**characterized in that**
the first section (34) of the energy chain (3) is shorter than the second section (32).

7. Cable guide (1) according to one of claims 1 to 6,
**characterized in that**
the tensioning device (24) comprises a compression-loaded spring (24).

8. Cable guide (1) according to one of claims 1 to 7,
**characterized in that**
the second end link (22) of the energy chain (3) is mounted on and secured against rotation with respect to the second connection device (2).

9. Motor vehicle (5) with a vehicle body (52) and at least one sliding door (54),
**characterized in that**
the motor vehicle (5) comprises a cable guide (1) according to any one of claims 1 to 8.

10. Motor vehicle (5) according to claim 9,
**characterized in that**
the first connection device (4) of the cable guide (1) is attached to the vehicle body (52) and that the second connection device (2) of the cable guide (1) is attached to the sliding door (54).

## Revendications

1. Guide-câbles (1) pour une liaison par câble entre une carrosserie de véhicule (52) et une porte coulissante (54) comprenant un premier dispositif de raccordement (4), un deuxième dispositif de raccordement (2) ainsi qu'une chaîne porte-câbles (3) qui s'étend entre le premier dispositif de raccordement (4) et le deuxième dispositif de raccordement (2) et qui présente une configuration étirée lorsque la porte coulissante (54) est fermée et une configuration déviée lorsque la porte coulissante (54) est ouverte, la chaîne porte-câbles (3) étant munie d'un premier maillon d'extrémité (42) à une extrémité et d'un deuxième maillon d'extrémité (22) à l'extrémité opposée, le premier maillon d'extrémité (42) étant logé pivotant sur le premier dispositif de raccordement (4) et le deuxième dispositif de raccordement (2) comprenant un dispositif de tension (24) pour la chaîne porte-câbles (3), **caractérisé en ce que** le deuxième maillon d'extrémité (22) de la chaîne porte-câbles (3) est logé mobile longitudinalement sur le deuxième dispositif de raccordement (2) et est sollicité par le dispositif de tension (24) de telle sorte que le deuxième maillon d'extrémité (22) est maintenu mobile des deux côtés dans une position d'équilibre flottante lorsque la chaîne porte-câbles (3) est en configuration étirée.

2. Guide-câbles (1) selon la revendication 1,
**caractérisé en ce que**
le premier dispositif de raccordement (4) est conçu pour une fixation côté carrosserie et **en ce que** le deuxième dispositif de raccordement (2) est conçu pour une fixation côté porte.

3. Guide-câbles (1) selon la revendication 1 ou 2,
**caractérisé en ce que**
le premier maillon d'extrémité (42) de la chaîne porte-câbles (3) est logé pivotant sans précontrainte sur le premier dispositif de raccordement (4).

4. Guide-câbles (1) selon l'une des revendications 1 à 3,
**caractérisée en ce que**
la chaîne porte-câbles (3) présente un premier tronçon (34) au niveau du premier dispositif de raccordement (4) et un deuxième tronçon (32) au niveau du deuxième dispositif de raccordement (2), les deux tronçons (34, 32) pouvant être déviés dans des directions respectivement opposées en partant de la configuration étirée.

5. Guide-câbles (1) selon la revendication 4,
**caractérisé en ce que**
le premier tronçon (34) de la chaîne porte-câbles (3) présente un rayon de courbure minimal supérieur à celui du deuxième tronçon (32).

6. Guide-câbles (1) selon la revendication 4 ou 5,
**caractérisé en ce que**
le premier tronçon (34) de la chaîne porte-câbles (3) est plus court que le deuxième tronçon (32).

7. Guide-câbles (1) selon l'une des revendications 1 à 6,
**caractérisé en ce que**
le dispositif de tension (24) comprend un ressort de pression (24).

8. Guide-câbles (1) selon l'une des revendications 1 à 7,
**caractérisé en ce que**
le deuxième maillon d'extrémité (22) de la chaîne porte-câbles (3) est logé sur le deuxième dispositif de raccordement (2) en étant protégé contre la torsion.

9. Véhicule automobile (5) avec une carrosserie de véhicule (52) et au moins une porte coulissante (54),
**caractérisé en ce que**
le véhicule automobile (5) comprend un guide-câbles (1) selon l'une des revendications 1 à 8.

10. Véhicule automobile (5) selon la revendication 9,
**caractérisé en ce que**
le premier dispositif de raccordement (4) du guide-câbles (1) est fixé à la carrosserie (52) du véhicule et **en ce que** le deuxième dispositif de raccordement (2) du guide-câbles (1) est fixé à la porte coulissante (54).
